# EUROPEAN PATENT SPECIFICATION

(11) **EP 3 678 512 B1**
(45) Date of publication and mention of the grant of the patent: **18.11.2026**
(21) Application number: 18770092.7
(22) Date of filing: 31.08.2018
(51) Int. Cl.: A47B 91/00, A47B 91/02, F16B 12/20

(54) **FURNITURE AND FURNISHING ITEMS WITH A JOINING AND LEVELLING SYSTEM**
MÖBELTEILE UND MÖBELSTÜCKE MIT VERBINDUNGS- UND NIVELLIERSYSTEM
PARTIES DE MEUBLES ET D'ARTICLES D'AMEUBLEMENT AVEC SYSTÈME DE JONCTION ET DE MISE À NIVEAU

(30) Priority: 08.09.2017 IT 201700100709
(43) Date of publication of application: 15.07.2020
(73) Proprietor: Leonardo S.r.L., 22060 Figino Serenza (CO) (IT)
(72) Inventor: CATTANEO, Carlo, 22060 Figino Serenza (CO) (IT)
(74) Representative: Dragotti & Associati S.P.A.
(86) International application number: PCT/IB2018/056673
(87) International publication number: WO 2019/049008

(56) References cited:
- EP-A1- 2 653 068
- WO-A1-2005/115199
- WO-A1-2017/153175
- WO-A1-92/03663
- JP-A- 2002 085 176

## Description

The present invention relates to a furniture with a joining and levelling system.

Various pieces of furniture with a joining and levelling system are known, which involve the formation of a series of visible holes and spaces destined for actuating the junctions and in particular availing of a certain free space beneath the furniture for connecting the shoulder and bottom and for the adjustment of the front and rear levellers in the furniture.

Solutions are also known in which the joining and levelling systems for parts of furniture are contained in restricted spaces beneath the furniture and in general, they propose a front actuation which involves both the device for connecting a bottom to a shoulder and the levelling device of the furniture. Exemplary furniture is known for example from WO 2017/153175 A1, WO 2005/115199 A1, EP 2 653 068 A1, WO 92/03663 A1 and JP 2002 085176 A

In all of these cases, however, there is an arrangement of the piece of furniture in which the shoulder or shoulders rest on the floor and the bottom or lower shelf is raised with respect to the underlying floor, however a certain space is required beneath the bottom.

In the known art, in fact, or in all of these cases, there are joining and levelling devices certainly in a single body beneath the bottom, but positioned at different heights with respect to the bottom and/or the floor.

Consequently, in order to be able to have access to both the joining and levelling devices between the shoulder and bottom, the free space from the floor must have quite a significant dimension.

These solutions are not satisfactory, however, when extremely limited spaces are required between the lower shelves or bottoms of the furniture and the floor.

This necessity becomes even greater when these pieces of furniture in the form, for example, of living-room furniture incorporating built-in drawer units, cannot provide adjustable feet from the inside of the furniture that is occupied by the seat of the drawer unit.

The general objective of the present invention is to provide a furniture with a joining and levelling system which solves the problems and drawbacks indicated above.

A further objective of the present invention is to provide a furniture with a joining and levelling system that is particularly simplified, compact and that can be positioned in an extremely restricted space with serious difficulty of access.

Another objective of the present invention is to provide a furniture with a joining and levelling system that allows a front connection and adjustment, also for joints and levellers in rear bodies positioned beneath the bottom.

The above objectives are achieved by a furniture having the features specified in the enclosed claim 1 and sub-claims.

The structural and functional characteristics of the invention and the advantages with respect to the known art can be clearly understood from the following description, referring to the attached drawings, which illustrate various embodiments of the invention itself.

In the drawings:
- figure 1 is a perspective view illustrating an example of a furniture with a joining and levelling system produced according to the present invention designed for joining a shoulder on the floor and a base or bottom of a piece of furniture with joining and levelling devices positioned in a front and rear body beneath the bottom of the furniture;
- figure 2 is a raised sectional view obtained according to the line II-II of figure 4 of the front body shown in figure 1;
- figure 3 is a raised sectional view obtained according to the line III-III of figure 4 of the rear body shown in figure 1;
- figure 4 is a plan sectional view from below of what is illustrated in figure 1;
- figures 5 and 6 are perspective views according to different directions of a front body provided with a joining device and a levelling device inserted according to the system of the invention;
- figures 7 and 8 are plan views from above and below of the body shown in figures 5 and 6;
- figures 9, 10 and 11 are raised views from the two long sides and from a short side of the body of figures 5 and 6;
- figure 12 is a perspective view similar to that of figure 5 with a different angle with a joining grub screw and levelling device exploded from the front body;
- figure 13 is a perspective view of the levelling device of figure 12 with exploded parts;
- figures 14 and 15 are perspective views according to different directions of a rear body provided with a joining device and a levelling device inserted according to the system of the furniture of the invention;
- figures 16 and 17 are plan views from above and below of the body shown in figures 14 and 15;
- figures 18, 19 and 20 are raised views from the two long sides and from a short side of the body of figures 14 and 15;

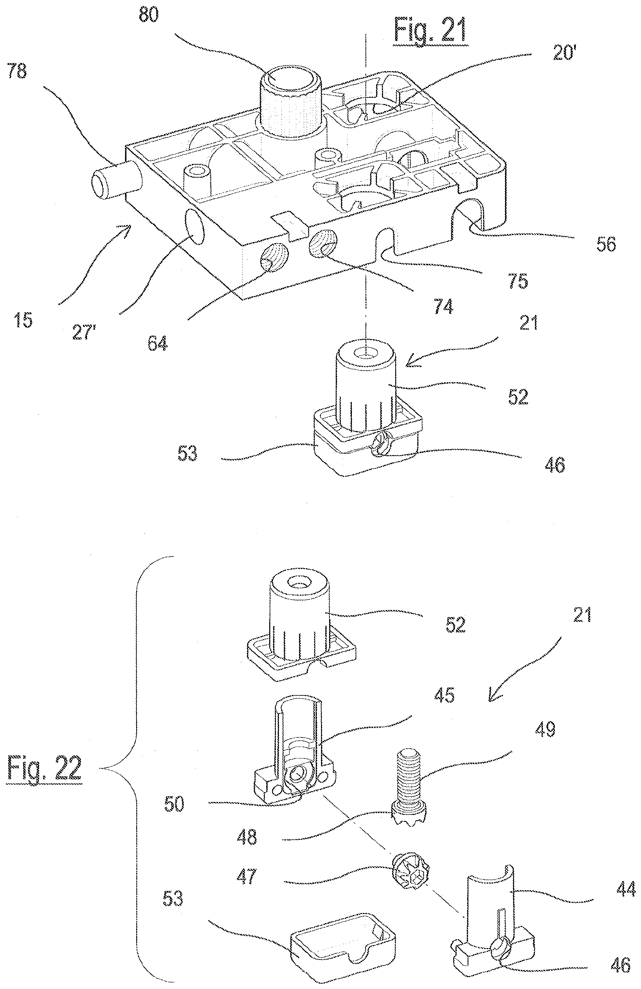

- figure 21 is a perspective view similar to that of figure 14 with a different angle with a levelling device exploded from the rear body;
- figure 22 is a perspective view of the levelling device of figure 21 with exploded parts;
- figures 23 to 26 are perspective views that show consecutive insertion phases of the front and rear body into the bottom, the transmission rods therein, the blockage in position of said transmission rods and the assembly of the shoulder with respect to the bottom provided with front and rear bodies.

With reference in general to the drawings, it can be noted that the figures partially illustrate a piece of furniture M, provided with shoulders 11 (in the examples side walls) (only one of which is shown) and a bottom 12.

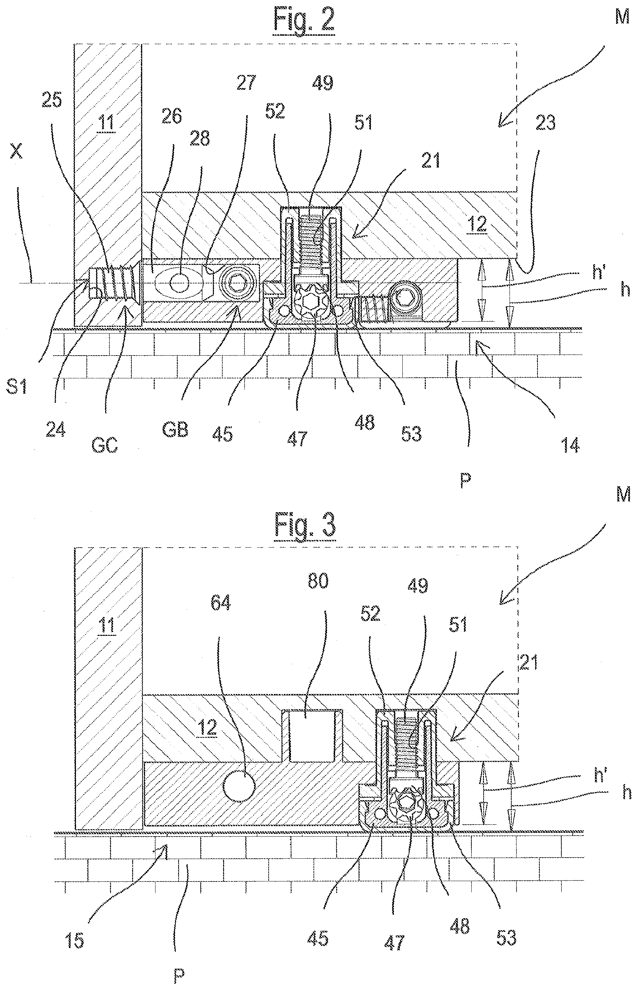

A front body 14 and a rear body 15 positioned beneath the bottom 12 are also shown. Neither the front body 14 nor the rear body 15 rests on a floor P (figures 2 and 3), but the shoulder 11 connected to the bottom 12 rests on the underlying floor P.

As can be seen, in furniture of this type, a relatively small space is defined beneath the bottom 12. The shoulder 11 or shoulders of the piece of furniture M sustain its entire weight (shoulders, bottom and shelves) in addition to that of the additional contents without any other support.

The distance in height h of the space between the bottom 12 and the floor P, makes it difficult for the operator to have access to the joining and levelling devices of the front body 14 and above all the rear body 15.

In this way it is very difficult to provide for the joining and especially for any adjustment when in use, due to the small distance h between the floor P and the bottom 12 of the furniture M.

In reality, it should be noted that the bodies 14, 15 have a height *h'* which is substantially equal to the height or distance *h* between the floor P and the bottom 12. In this case the weight would be distributed not only on the shoulders 11 as previously indicated, but also on the bodies 14 and 15.

Furthermore, it should be noted that the distance or height *h'* can be substantially equal to the thickness of the bottom 12 allowing a uniformity of measures to facilitate the positioning of the various parts and minimizing the number of different measures between them.

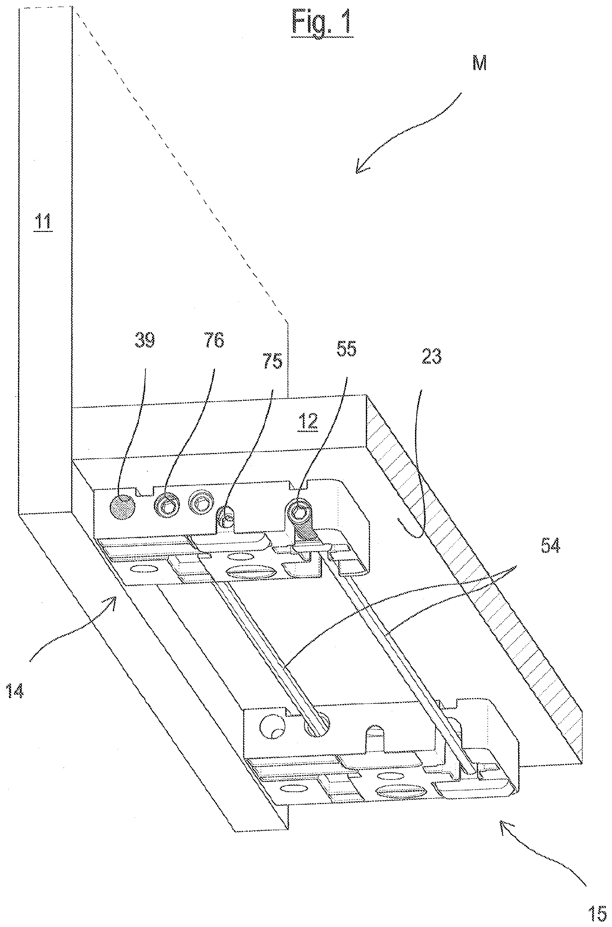

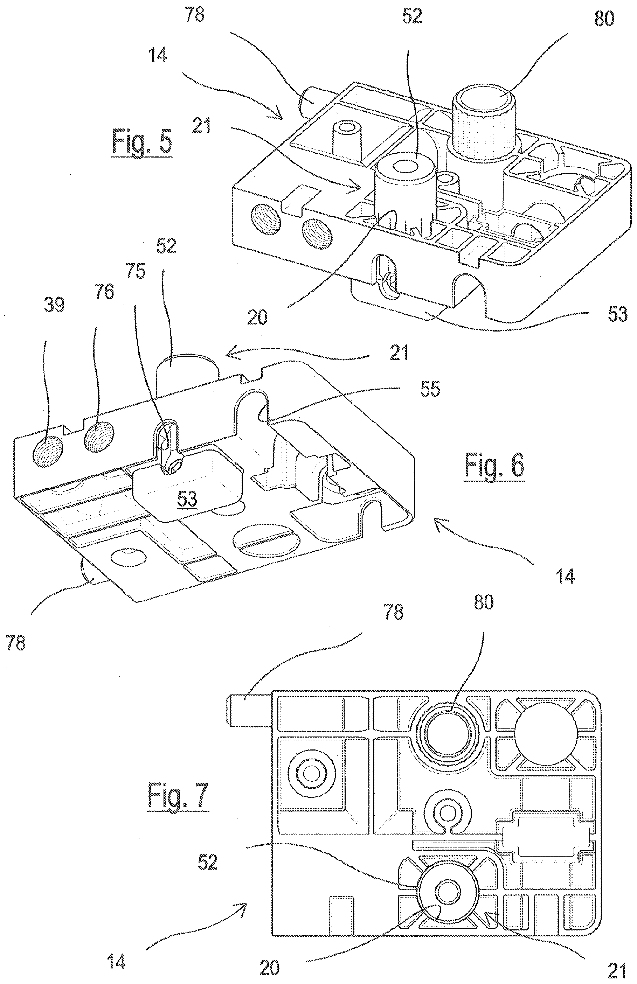

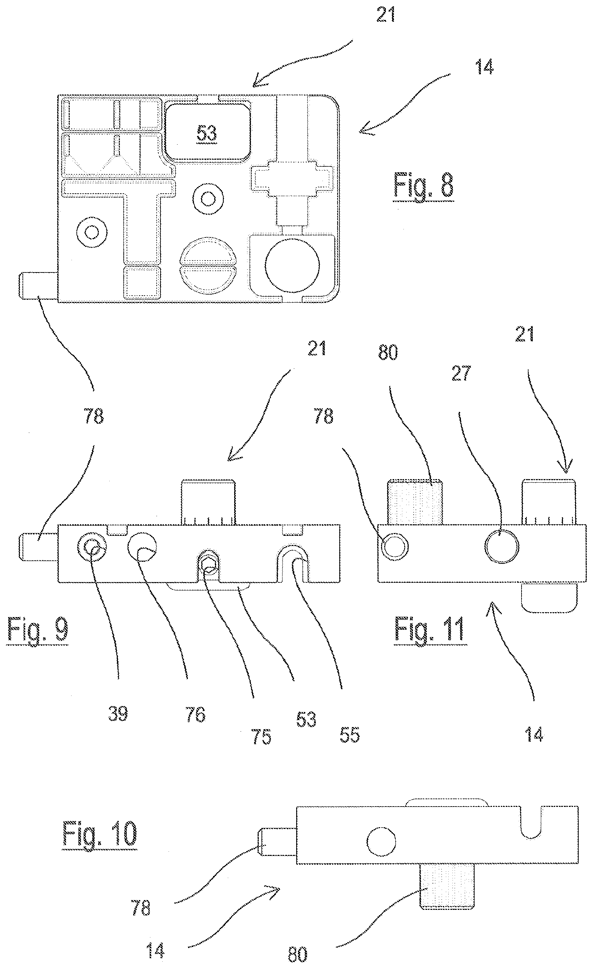

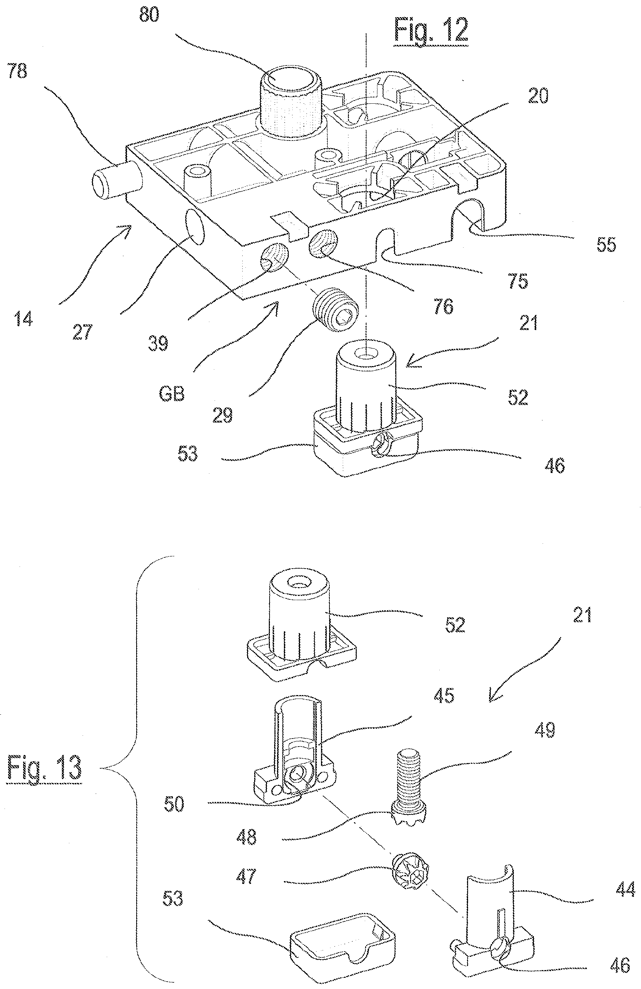

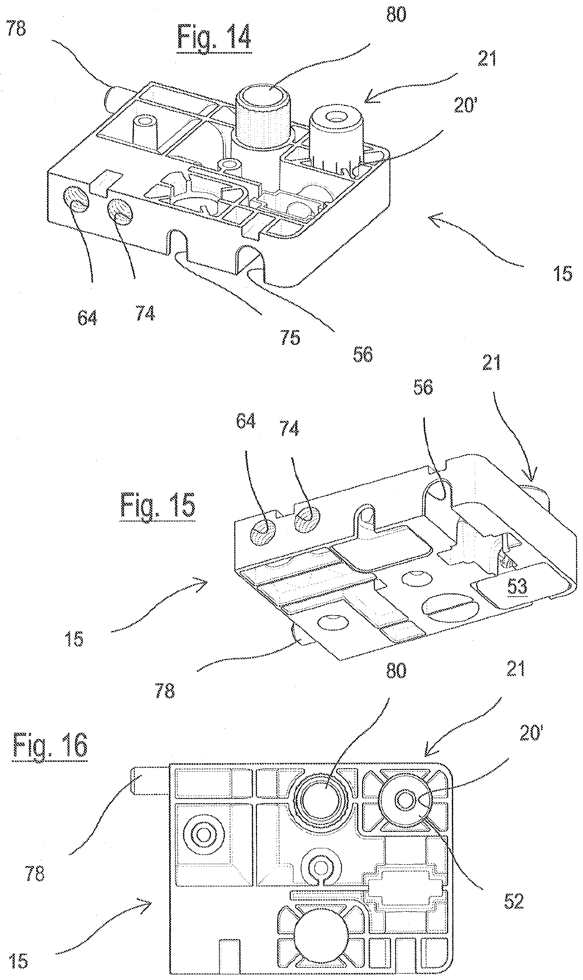

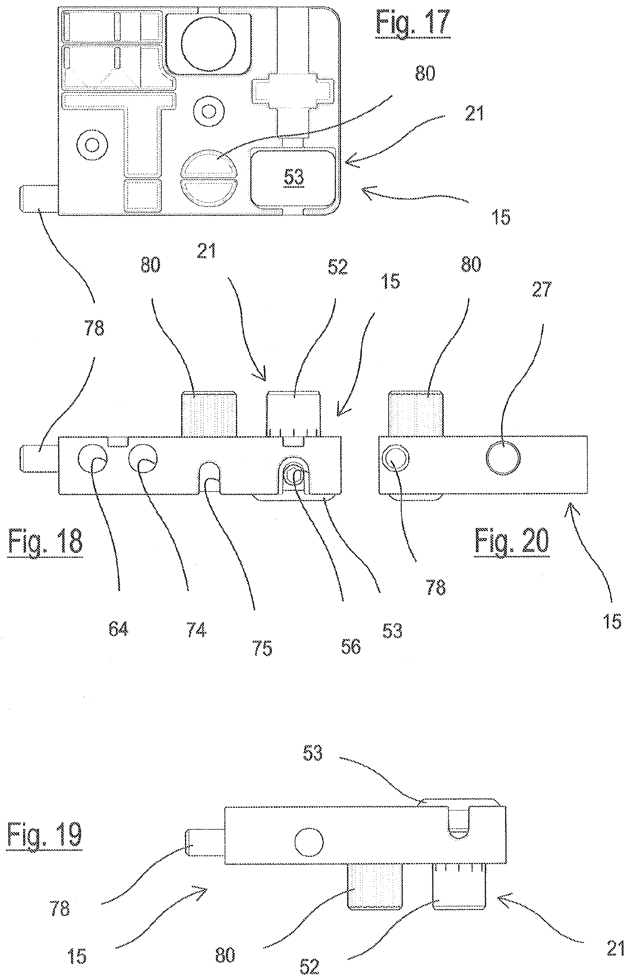

Figures 1 to 17 show, through a non-limiting example of the system of the furniture of the invention, how at least a front body 14 and a rear body 15 are fixed to the bottom or base 12 creating a completely innovative joining and levelling system.

Both the front body 14 and rear body 15 incorporate joining devices between the shoulder and bottom of the furniture and levelling devices with respect to the floor P.

From figures 1 to 13, it can be seen how, according to the invention, each front body 14 and rear body 15, for example, prismatic, can be associated beneath the bottom 12 and with a short side thereof in side contact with the shoulder 11.

The front body 14 and the rear body 15 are moulded for example in zamak or in another material suitable for the purpose. The body 14, 15 provides voids and ribs for lightening and/or stiffening.

Both the front body 14 and the rear body 15 provide a first recessed seat or housing 20, 20' for a levelling device 21 in addition to receiving, in suitable threaded holes 39, 64, a blocking grub screw 29 of a blocking group GB of a joining device that collaborates with a relative connection group GC.

It should also be noted that a symmetry axis X of the connection group GC coincides with or is substantially close to the centerline of the front 14 and rear 15 bodies. In this case, the horizontal hole 27, 27' of the bodies 14, 15, unlike what is shown, is advantageously produced according to a symmetry axis X coinciding with a symmetry axis of the bottom 12.

Furthermore, both the front body 14 and the rear body 15 provide an extension 80 protruding above the body 14, 15. Said extension 80 is housed in a hole 79 formed in a lower surface 23 in the bottom 12 and collaborating to provide a stable coupling between body 14, 15 and bottom 12.

The connection group GC of the joining device is arranged as follows. The shoulder 11 provides a seat S1 in the form of a horizontal blind hole 24, a threaded end 25 of a pin 26, 26' protruding from the shoulder 11 being stably positioned in said hole 24.

The pins 26, 26', in their protruding part, both provide a housing 28 for a tip of the blocking grub screw 29 of the blocking group GB of the joining device. The pins 26, 26' are to be used for the front body 14 and the rear body 15 respectively.

Furthermore, they are of different lengths to allow them to be actuated from the front part of the furniture. It can in fact be seen from the figures that the pin 26 of the front body 14 is shorter with respect to the pin 26' of the rear body 15. The housing 28 in the pin 26 is arranged at a smaller distance a of the shoulder 11 with respect to a distance b at which the housing 28 of the pin 26' is positioned.

The pin 26, 26', with an axis arranged on a plane parallel to the bottom 12 and to the floor P, is housed in a horizontal hole 27, 27' of the body 14, 15. It can also be noted that the hole 27 is aligned with the hole 24 of the shoulder 11 of the furniture M.

It should be noted that both the front body 14 and the rear body 15 have a plug extension 78 on their short side facing the shoulder. This extension 78 is housed in a blind hole 77 formed in the shoulder 11. The provision of at least one plug extension 78 gives greater stability to the coupling between the shoulder 11 and the front and rear body 14, 15.

It can therefore also be seen how the blocking group GB of the joining device is created through the threaded holes 39, 64 and the grub screws 29.

The action of a tool for rotating the grub screw 29 inside the threaded holes 39, 64 causes the tip of the grub screw 29 to be brought between a disengagement position and an engagement position with the housing 28 of the respective pin 26, 26'.

This causes the blocking of the pin 26, 26' and therefore the body 14, 15 integral with the bottom 12 with respect to the shoulder 11 of the furniture M.

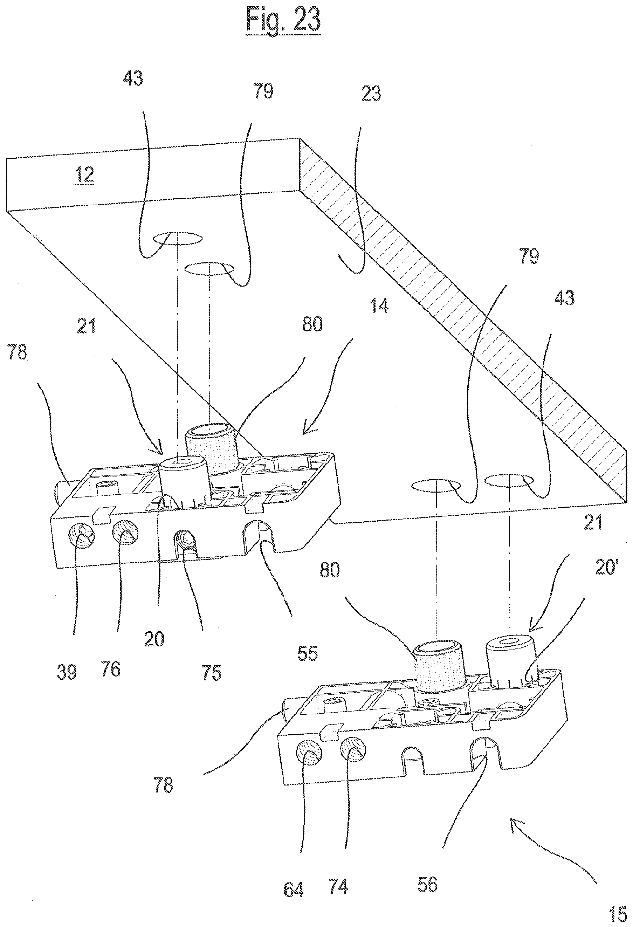

Figure 23 shows how, according to the invention, a part of the levelling device 21 is inserted in a blind hole 43 formed in the lower surface 23 of the bottom 12 downwards.

The levelling device 21 provides a cylindrical casing, produced for example by means of a pair of half-shells 44, 45 blocked together by means of a base cap or lid 53. In the half-shell 44 of the casing, a hole 46 is provided below for actuating the levelling device 21. The hole 46 provides access to movement means of the leveller 21. A pinion-toothed crown bevel is in fact positioned inside the casing 44, 45. A pinion 47 is rotatingly positioned inside the casing 44, 45, and engages with a toothed crown 48, formed as the head of a threaded screw 49. The toothed crown 48 is rotatable inside a housing 50 of the casing 44, 45, free to rotate but not to translate. The threaded screw 49 is in turn positioned in a threaded hole 51 inside a hollow pusher element 52, in the form of an overturned cup. The hollow pusher element 52 is positioned coaxially with respect to the outside of the casing 44, 45. The rotation of the threaded screw 49 causes the upward and/or downward movement of the hollow pusher element 52 and the adjustment of the leveller by means of a thrust engagement inside a blind hole 43 of the bottom 12.

With these means positioning is obtained at the level of the furniture M with respect to the floor P.

A tool (not shown) controls, through its tip, the pinion 47 passing through the hole 46 of the half-shell 44 of the casing.

For this operation, however, the tool must pass into a front opening 75 of the front body 14.

Figure 23 shows how a front body 14 and a rear body 15 provided with part of the joining device and levelling device are positioned integral with the bottom 12. This is because part of the levelling device 21 and the extension 80 protruding above the body 14, 15 are inserted in respective holes 43 and 79 formed in the lower surface 23 of the bottom 12 facing downwards facing the floor P.

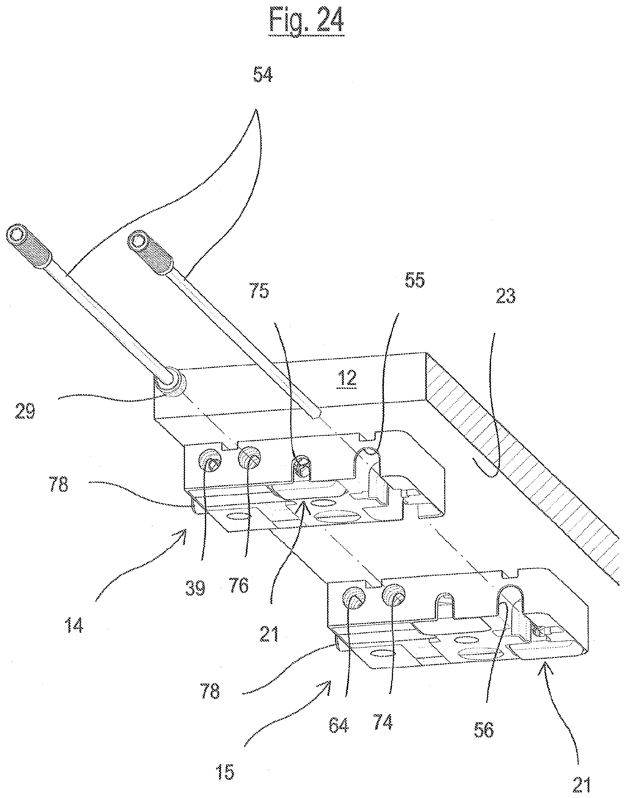

Figure 24 shows how, once positioned in this way, the front body 14 and the rear body 15, complete with joining device and levelling device, are provided with two transmission rods 54. The first transmission rod 54 is positioned in threaded holes 76 of the body 14 and 15 until it engages a grub screw 29 provided in the rear body 15.

The second rod 54 is positioned in openings 55, 56 passing through the front body 14 and rear body 15 to reach and engage its end in the pinion 47 of the levelling device positioned in the rear body 15.

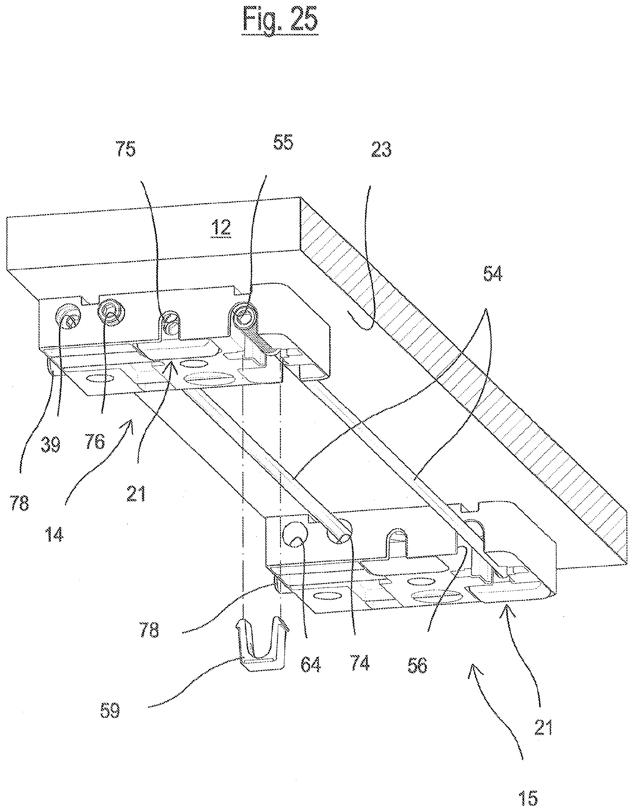

The following figure 25 shows how a blocking peg 59 is inserted in a housing 60 of the front body 14 to cause the blockage in this operative position of the transmission rod 54 for the levelling device 21 positioned in the rear body 15.

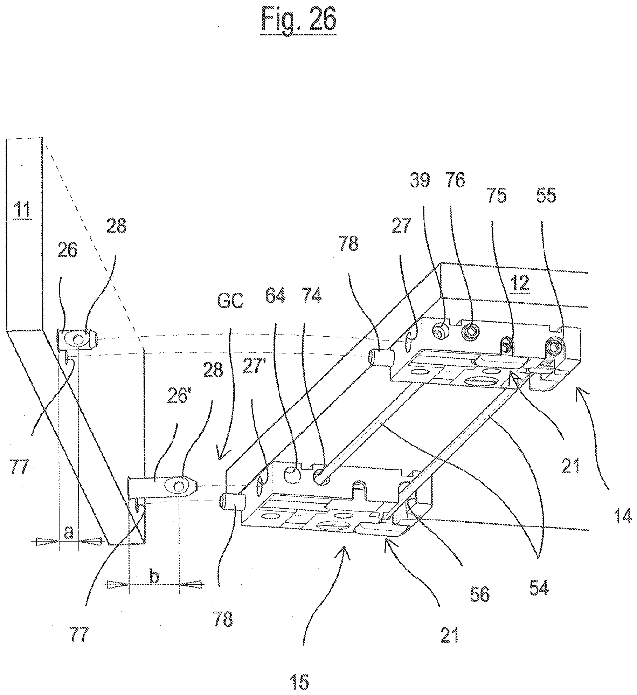

Finally, figure 26 shows the final phase in which the shoulder 11 is assembled on the bottom 12.

For this purpose, the pins 26, 26' protruding from the shoulder 11, are inserted in the holes 27 which are formed horizontally in the bottom 12 in a direction parallel to the floor P. Furthermore, the plug extensions 78 of the front body 14 and rear body 15 are housed in the holes 77 in the shoulder 11 giving stability to the coupling between the shoulder 11 and bodies 14, 15.

It can also be seen how figure 1 or figures 25, 26 show that actuating points of the connection group GC, the blocking group GB and levelling group 21 of both the front body 14 and rear body 15 are arranged adjacently on a horizontal plane parallel to the floor P and the bottom 12. The encumbrance of the body 14 or 15 is therefore minimized.

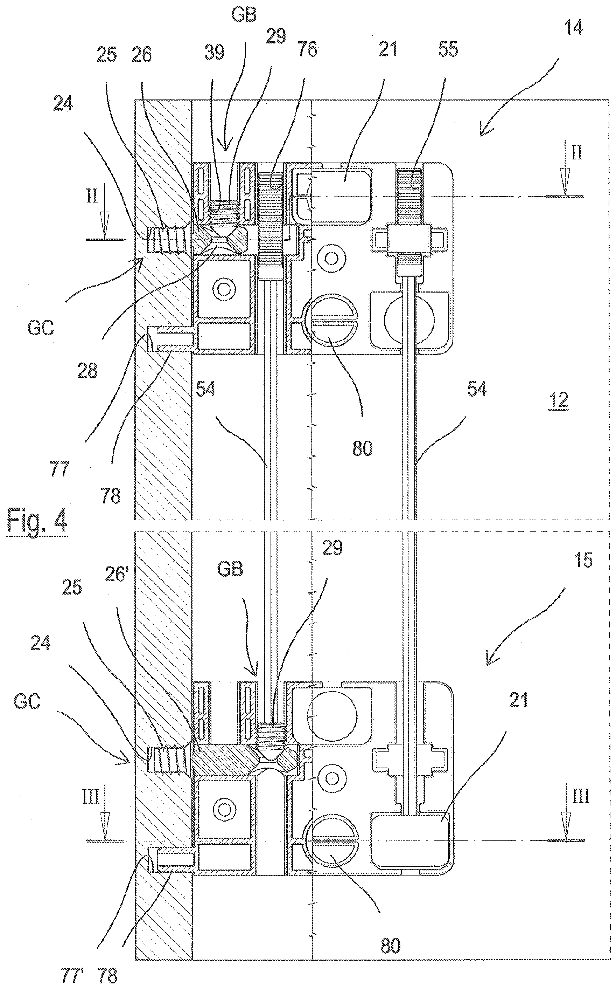

From the plan view of figure 4 and perspective views for example of figures 1 and 26, it can also be seen how the leveller 21 of the front body 14 and the leveller 21 of the rear body 15 are arranged offset. This offset arrangement also applies to the grub screw 29 of the blocking group GB and the housing 28 of the pin 26, 26' of the connection group GC of the joining device.

In this way, thanks to this arrangement, the transmission rods 54 are always in a position parallel to each other, regardless of the depth of the furniture.

This arrangement facilitates the actuation and makes it safer as the forces are applied frontally and perpendicularly to the furniture.

Furthermore this offset arrangement allows the minimum space possible to be occupied and enables an easy actuation of both.

The functioning of the joining and levelling system of furniture according to the invention with the shoulder on the floor and with minimum encumbrance previously described is simple and can be easily understood from what has just been indicated and shown in the accompanying drawings.

Furniture with a joining and levelling system of this type with the shoulder on the floor according to the invention enables there to be no visible holes and also allows an easy connection and levelling of the furniture.

The system is fixed to the bottom of the furniture and allows its front actuation with respect to the furniture through the space between the bottom, shoulder and floor even when the space between the bottom and shoulder and floor is extremely limited due to the minimum encumbrance of the bodies of the system containing the various devices.

It should also be noted that a system of furniture according to the invention contains both the connection group GC and the blocking group GB and also the levelling group 21.

Any actuation drawback is eliminated as it is possible to act both in connection and above all in levelling from the front part of the furniture without any visible hole in the furniture itself.

Once the parts of the system have been arranged as indicated in figures 23 to 26 as shown in figure 1, it is possible to act with a tool.

A first operation is effected by passing the tool from a front threaded opening 39 of the front body 14 and acting on the grub screw 29 which can be screwed into the same. The grub screw 29 is thus housed in the housing 28 of the pin 26 positioned at a distance a from the shoulder 11. The functioning of the blocking of the blocking group GB of the front body 14 is thus actuated.

Furthermore, the same tool acts on the end of the transmission rod 54 positioned in an opening 76 of the front body 14. At the other end, the transmission rod 54 is engaged with the grub screw 29 of the blocking group GB of the rear body 15. When said grub screw 29 is screwed into the threaded hole 74, it is brought to be arranged in the housing 28 of the pin 26' positioned at a distance b of the shoulder 11. The blocking of the blocking group GB of the rear body 15 is thus actuated.

In this way, the shoulder 11, the bottom 12 and the front body 14 and rear body 15 are blocked together and integral thanks to the presence of the relative connection group GC and blocking group GB.

A similar operation is also effected for the levelling in the present system of furniture according to the invention.

Again from Figure 1, in fact, it can be seen how, by acting with a tool, passing from the opening 75 of the front body 14, on the pinion 47 of the levelling device 21, the adjustment of the front part of the levelling is effected. According to the invention, this takes place thanks to the movement of the hollow pusher element 52 inside the blind hole 43 of the bottom 12 which, by pushing the bottom 12, causes its upward movement and the adjustment of the leveller.

This levelling operation is completed by acting with a tool on the head of the relative transmission rod 54. Said transmission rod 54 is housed in the opening 55 of the front body 14. The opposite end of the transmission rod 54 thus acts on the pinion 47 of the levelling device 21 housed in the rear body 15. This action identically causes the engagement of the hollow pusher element 52 inside the blind hole 43 of the bottom 12. The raising or lowering of the bottom allows the adjustment of the leveller also present in the rear body 15.

In view of the functioning illustrated above, the characteristics of the furniture of the present invention are therefore repeated.

A furniture with a joining and levelling system of this type allows there to be no visible hole, once it has been correctly assembled for connecting and levelling the furniture, thus giving the furniture a high aesthetic and functional characteristic.

This type of furniture provides a limited and reduced encumbrance and makes it possible to have a front body and a rear body containing the joining and levelling devices in the presence of a minimum encumbrance between the shoulder and bottom with respect to the floor.

Furthermore, even in the presence of such a reduced encumbrance, it is possible to effect both the connection and blocking between the shoulder and bottom together with the adjustment of the level of the furniture, from the front part of the furniture.

This is all achieved with a front actuation with respect to the furniture through the minimum space between the bottom and shoulder and floor, in an extremely limited space between the bottom, shoulder and floor and generally considered by an operator as being very restricted.

Advantageously, with the furniture of the present invention, both the connection or joining group with relative blocking and also the levelling group beneath the thickness of the bottom and shoulder of the furniture are particularly compact and easy to actuate on the part of any operator.

Any actuation drawback is eliminated as it is possible to act both in connection and above all in levelling from the front part of the furniture without any visible hole in the furniture itself.

This provision also allows the elimination of any further element that serves for guaranteeing the correct direction or orientation of the screwdriver that must be present in the known additional systems in the form of a guide or similar item fixed to the bottom of the furniture.

The objectives mentioned in the preamble of the description have thus been achieved.

The protection scope of the present invention is defined by the enclosed claims.

## Claims

1. Furniture (M) comprising a bottom (12) and at least one shoulder (11) positionable with respect to a floor (P) and a joining and levelling system, said system comprising, in combination, at least a front body (14) and at least a rear body (15), wherein each front and rear body (14,15) comprises at least one connection group (GC) and a blocking group (GB) of a joining device, suitable for stably interconnecting said bottom (12) and said at least one shoulder, said connection group (GC) of each front body (14) and rear body (15) comprises a pin (26,26'), positioned integrally in a shoulder (11), and said blocking group (GB) comprises a grub screw (29) positioned in a threaded hole (39) that can be moved between an engagement position and a disengagement position with said pin (26,26') and wherein each front and rear body (14,15) further comprises a levelling group (21), said levelling group (21) provides a cylindrical casing (44,45) with a hole (46) that provides access to movement means of the levelling group (21), said casing (44,45) containing in its interior a pinion-toothed crown bevel (47,48) wherein a pinion (47) is rotatingly positioned inside the casing (44,45) and is engaged with a toothed crown (48), formed as the head of a threaded screw (49), said toothed crown (48) being free to rotate inside a housing (50) of the casing (44,45), not to translate, wherein said threaded screw (49) is in turn positioned in a threaded hole (51) inside a hollow pusher element (52), positioned coaxially with respect to the outside of the casing (44,45), wherein said connection group (GC), said blocking group (GB) of the joining device and said levelling group (21) can be actuated from the front of the furniture, wherein said front body (14) and said rear body (15) are positioned with their short side in lateral contact with said shoulder (11) and beneath said bottom (12) and actuation points of said connection group (GC), blocking group (GB) and levelling group (21) of said front and rear bodies (14,15) are positioned on a horizontal plane parallel to said floor and to said bottom (12), adjacent to each other, wherein a symmetry axis (X) of said connection group (GC) coincides with or is substantially close to a centre line of said bodies (14,15) **characterized in that** a part of the levelling group (21) is inserted in a blind hole (43) formed in the lower surface (23) of the bottom (12) downwards, said movable hollow pusher element (52) is in the form of an overturned cup and is inside the blind hole (43) of the bottom (12), and, by pushing the bottom (12), causes the movement and the adjustment of the levelling group (21).

2. Furniture according to claim 1, **characterized in that** the thickness of said bottom (12) is substantially equal to the distance (*h*) between said floor (P) and said bottom (12).

3. Furniture according to claim 2, **characterized in that** a height (*h'*) of said bodies (14,15) is substantially equal to said distance (*h*).

4. Furniture according to claim 1, **characterized in that** said levelling group (21) of said front body (14) is positioned offset with respect to the levelling group (21) of said rear body (15).

5. Furniture according to claim 1 or 4, **characterized in that** said blocking group (GB) and levelling group (21) of said rear body (15) are connected to said front body (14) by return rods (54).

6. Furniture according to claim 1, **characterized in that** said return rods (54) for each blocking group (GB) and levelling group (21) of said rear body (15) are positioned parallel to each other.

7. Furniture according to any of the previous claims, **characterized in that** each front and rear body (14,15) is a moulded body in zamak or another material and provides voids and lightening and/or stiffening ribs.

8. Furniture according to claim 7, **characterized in that** said body (14,15) of the prismatic type can be associated beneath the bottom (12) and next to said at least one shoulder (11) and provides, from at least a short side, at least one pin extension (78) which is housed in a blind hole (77) formed in said shoulder (11) positioned alongside.

9. Furniture according to any of the previous claims, **characterized in that** each front and rear body (14,15) provides a plurality of openings (39, 76, 75, 55; 64, 74, 56) for a manoeuvring actuation tool of the connection group (GC), blocking group (GB) and levelling group (GL).

10. Furniture according to any of the claims from 7 to 9, **characterized in that** said front and rear body (14,15) provides a hollow seat or housing (20,20') for the levelling device (21).

11. Furniture according to claim 10, **characterized in that** said hollow seat or housing (20,20') in said front body (14) is positioned offset with respect to said hollow seat or housing (20') formed in said rear body (15) so as to occupy the minimum space possible and allow a front actuation of the connection group (GC), blocking group (GB) and levelling group (21).

## Patentansprüche

1. Möbelstück (M), umfassend einen Unterboden (12) und mindestens eine Schulter (11), die in Bezug auf einen Fußboden (P) positionierbar ist, sowie ein Verbindungs- und Nivelliersystem, wobei das System in Kombination mindestens einen vorderen Körper (14) und mindestens einen hinteren Körper (15) umfasst, wobei jeder vordere und hintere Körper (14,15) mindestens eine Verbindungsgruppe (GC) und eine Verriegelungsgruppe (GB) einer Verbindungsvorrichtung umfasst, die geeignet sind, den Unterboden (12) und die mindestens eine Schulter stabil miteinander zu verbinden, wobei die Verbindungsgruppe (GC) jedes vorderen Körpers (14) und jedes hinteren Körpers (15) einen Stift (26,26') umfasst, der fest in einer Schulter (11) angeordnet ist, und die Verriegelungsgruppe (GB) eine Madenschraube (29) umfasst, die in einer Gewindebohrung (39) angeordnet ist und zwischen einer Eingriffsposition und einer Ausrückposition mit dem Stift (26,26') bewegt werden kann, und wobei jeder vordere und hintere Körper (14,15) ferner eine Nivelliergruppe (21) umfassen, wobei die Nivelliergruppe (21) ein zylindrisches Gehäuse (44,45) mit einer Bohrung (46) bereitstellt, die Zugang zu den Bewegungsmitteln der Nivelliergruppe (21) bereitstellt, wobei das Gehäuse (44,45) in seinem Inneren ein Kegelradgetriebe aus Ritzel und Zahnkrone (47,48) enthält, bei dem ein Ritzel (47) drehbar im Gehäuse (44,45) angeordnet ist und mit einer Zahnkrone (48) in Eingriff steht, das als Kopf einer Gewindeschraube (49) ausgebildet ist, wobei die Zahnkrone (48) sich frei innerhalb eines Gehäuses (50) des Gehäuses (44,45) drehen kann, ohne verschoben zu werden, wobei die Gewindeschraube (49) ihrerseits in einer Gewindebohrung (51) im Inneren eines hohlen Schubelements (52) angeordnet ist, das koaxial zur Außenseite des Gehäuses (44,45) angeordnet ist, wobei die Verbindungsgruppe (GC), die Verriegelungsgruppe (GB) der Verbindungsvorrichtung und die Nivelliergruppe (21) von der Vorderseite des Möbelstücks aus betätigt werden können, wobei der vordere Körper (14) und der hintere Körper (15) mit ihrer kurzen Seite in seitlichem Kontakt mit der Schulter (11) und unterhalb des Unterbodens (12) angeordnet sind und die Betätigungspunkte der Verbindungsgruppe (GC), der Verriegelungsgruppe (GB) und der Nivelliergruppe (21) der vorderen und hinteren Körper (14,15) in einer horizontalen Ebene parallel zum Boden und zum Unterboden (12) angeordnet sind, die aneinander angrenzen, wobei eine Symmetrieachse (X) der Verbindungsgruppe (GC) mit einer Mittellinie der Körper (14,15) zusammenfällt oder im Wesentlichen nahe daran liegt, **dadurch gekennzeichnet, dass** ein Teil der Nivelliergruppe (21) in ein in der Unterseite (23) des Unterbodens (12) nach unten ausgebildetes Sackloch (43) eingesetzt ist, wobei das bewegliche hohle Schubelement (52) die Form eines umgedrehten Bechers aufweist, sich innerhalb des Sacklochs (43) des Unterbodens (12) befindet und durch Drücken des Unterbodens (12) die Bewegung und die Einstellung der Nivelliergruppe (21) bewirkt.

2. Möbelstück nach Anspruch 1, **dadurch gekennzeichnet, dass** die Dicke des Unterbodens (12) im Wesentlichen dem Abstand (*h*) zwischen dem Fußboden (P) und dem Unterboden (12) entspricht.

3. Möbelstück nach Anspruch 2, **dadurch gekennzeichnet, dass** eine Höhe (*h'*) der Körper (14,15) im Wesentlichen dem Abstand (*h*) entspricht.

4. Möbelstück nach Anspruch 1, **dadurch gekennzeichnet, dass** die Nivelliergruppe (21) des vorderen Körpers (14) gegenüber der Nivelliergruppe (21) des hinteren Körpers (15) versetzt angeordnet ist.

5. Möbelstück nach Anspruch 1 oder 4, **dadurch gekennzeichnet, dass** die Verriegelungsgruppe (GB) und die Nivelliergruppe (21) des hinteren Körpers (15) über Rückstellstangen (54) mit dem vorderen Körper (14) verbunden sind.

6. Möbelstück nach Anspruch 1, **dadurch gekennzeichnet, dass** die Rückstellstangen (54) für jede Verriegelungsgruppe (GB) und jede Nivelliergruppe (21) des hinteren Körpers (15) parallel zueinander angeordnet sind.

7. Möbelstück nach einem der vorstehenden Ansprüche, **dadurch gekennzeichnet, dass** jeder vordere und hintere Körper (14,15) ein Formteil aus Zamak oder einem anderen Material ist und Hohlräume sowie Entlastungs- und/oder Versteifungsrippen aufweist.

8. Möbelstück nach Anspruch 7, **dadurch gekennzeichnet, dass** der prismenförmige Körper (14,15) unterhalb des Unterbodens (12) und neben der mindestens einen Schulter (11) angeordnet werden kann und von mindestens einer kurzen Seite aus mindestens einen Stiftvorsprung (78) bereitstellt, der in einem in der daneben angeordneten Schulter (11) ausgebildeten Sackloch (77) aufgenommen ist.

9. Möbelstück nach einem der vorstehenden Ansprüche, **dadurch gekennzeichnet, dass** jeder vordere und hintere Körper (14,15) eine Vielzahl von Öffnungen (39, 76, 75, 55; 64, 74, 56) für ein Betätigungswerkzeug zur Handhabung der Verbindungsgruppe (GC), der Verriegelungsgruppe (GB) und der Nivelliergruppe (GL) bereitstellt.

10. Möbelstück nach einem der Ansprüche 7 bis 9, **dadurch gekennzeichnet, dass** der vordere und der hintere Körper (14,15) einen hohlen Sitz oder ein Gehäuse (20,20') für die Nivelliervorrichtung (21) bereitstellt.

11. Möbelstück nach Anspruch 10, **dadurch gekennzeichnet, dass** der hohle Sitz oder das Gehäuse (20,20') im vorderen Körper (14) versetzt zu dem im hinteren Körper (15) ausgebildeten hohlen Sitz oder Gehäuse (20') angeordnet ist, um möglichst wenig Platz einzunehmen und eine Betätigung der Verbindungsgruppe (GC), der Verriegelungsgruppe (GB) und der Nivelliergruppe (21) von vorne zu ermöglichen.

## Revendications

1. Meuble (M) comprenant une base (12) et au moins un épaulement (11) pouvant être positionné par rapport à un sol (P), et un système d'assemblage et de mise à niveau, ledit système comprenant, en combinaison, au moins un corps avant (14) et au moins un corps arrière (15), dans lequel chaque corps avant et arrière (14,15) comprend au moins un groupe de liaison (GC) et un groupe de blocage (GB) d'un dispositif d'assemblage, adapté pour relier de manière stable ladite base (12) et ledit au moins un épaulement, ledit groupe de liaison (GC) de chaque corps avant (14) et corps arrière (15) comprend une goupille (26,26'), positionnée d'un seul tenant dans un épaulement (11), et ledit groupe de blocage (GB) comprend une vis sans tête (29) positionnée dans un trou fileté (39) qui peut être déplacée entre une position de mise en prise et une position de désolidarisation avec ladite goupille (26,26') et dans lequel chaque corps avant et arrière (14,15) comprend en outre un groupe de mise à niveau (21), ledit groupe de mise à niveau (21) fournit un boîtier cylindrique (44,45) avec un trou (46) qui fournit un accès aux moyens de déplacement du groupe de mise à niveau (21), ledit boîtier (44,45) contenant en son intérieur un biseau à couronne à dents de pignon (47,48) dans lequel un pignon (47) est positionné de manière rotative à l'intérieur du boîtier (44,45) et est en prise avec une couronne dentée (48), formée comme la tête d'une vis filetée (49), ladite couronne dentée (48) étant libre de tourner à l'intérieur d'un logement (50) du boîtier (44,45), mais pas de se déplacer en translation, dans lequel ladite vis filetée (49) est à son tour positionnée dans un trou fileté (51) à l'intérieur d'un élément poussoir creux (52), positionné coaxialement par rapport à l'extérieur du boîtier (44,45), dans lequel ledit groupe de liaison (GC), ledit groupe de blocage (GB) du dispositif d'assemblage et ledit groupe de mise à niveau (21) peuvent être actionnés à partir de l'avant du meuble, dans lequel ledit corps avant (14) et ledit corps arrière (15) sont positionnés avec leur côté court en contact latéral avec ledit épaulement (11) et sous ladite base (12) et les points d'actionnement dudit ensemble de liaison (GC), le groupe de blocage (GB) et le groupe de mise à niveau (21) desdits corps avant et arrière (14,15) sont positionnés sur un plan horizontal parallèle audit plancher et à ladite base (12), adjacents l'un à l'autre, dans lequel un axe de symétrie (X) dudit groupe de liaison (GC) coïncide avec ou est sensiblement proche d'une ligne centrale desdits corps (14,15) **caractérisé en ce qu'**une partie du groupe de mise à niveau (21) est insérée dans un trou borgne (43) formé dans la surface inférieure (23) de la base (12) vers le bas, ledit élément poussoir creux mobile (52) se présente sous la forme d'une coupelle renversée et est à l'intérieur du trou borgne (43) de la base (12), et, en poussant la base (12), provoque le mouvement et l'ajustement du groupe de mise à niveau (21).

2. Meuble selon la revendication 1, **caractérisé en ce que** l'épaisseur de ladite base (12) est sensiblement égale à la distance (*h*) entre ledit plancher (P) et ladite base (12).

3. Meuble selon la revendication 2, **caractérisé en ce qu'**une hauteur (*h'*) desdits corps (14,15) est sensiblement égale à ladite distance (*h*).

4. Meuble selon la revendication 1, **caractérisé en ce que** ledit groupe de mise à niveau (21) dudit corps avant (14) est positionné de manière décalée par rapport au groupe de mise à niveau (21) dudit corps arrière (15).

5. Meuble selon la revendication 1 ou 4, **caractérisé en ce que** ledit groupe de blocage (GB) et ledit groupe de mise à niveau (21) dudit corps arrière (15) sont reliés audit corps avant (14) par des tiges de retour (54).

6. Meuble selon la revendication 1, **caractérisé en ce que** lesdites tiges de retour (54) pour chaque groupe de blocage (GB) et chaque groupe de mise à niveau (21) dudit corps arrière (15) sont positionnées parallèlement les unes aux autres.

7. Meuble selon l'une quelconque des revendications précédentes, **caractérisé en ce que** chaque corps avant et arrière (14,15) est un corps moulé en zamak ou en un autre matériau et fournit des cavités et des nervures d'allègement et/ou de rigidification.

8. Meuble selon la revendication 7, **caractérisé en ce que** ledit corps (14,15) du type prismatique peut être associé sous la base (12) et à proximité dudit au moins un épaulement (11) et fournit, à partir d'au moins un côté court, au moins une extension de goupille (78) qui est logée dans un trou borgne (77) formé dans ledit épaulement (11) positionné à côté.

9. Meuble selon l'une quelconque des revendications précédentes, **caractérisé en ce que** chaque corps avant et arrière (14,15) fournit une pluralité d'ouvertures (39, 76, 75, 55 ; 64, 74, 56) destinées à un outil d'actionnement de manœuvre du groupe de liaison (GC), du groupe de blocage (GB) et du groupe de mise à niveau (GL).

10. Meuble selon l'une quelconque des revendications 7 à 9, **caractérisé en ce que** ledit corps avant et arrière (14,15) fournit un siège ou logement creux (20,20') pour le dispositif de mise à niveau (21).

11. Meuble selon la revendication 10, **caractérisé en ce que** ledit siège ou logement creux (20,20') dans ledit corps avant (14) est positionné de manière décalée par rapport audit siège ou logement creux (20') formé dans ledit corps arrière (15) de manière à occuper le minimum d'espace possible et à permettre un actionnement par l'avant du groupe de liaison (GC), du groupe de blocage (GB) et du groupe de mise à niveau (21).
